# FASCICULE DE BREVET EUROPEEN

(11) **EP 1 979 077 B1**
(45) Date de publication et mention de la délivrance du brevet: **16.07.2014**
(21) Numéro de dépôt: 07718136.0
(22) Date de dépôt: 18.01.2007
(51) Int. Cl.: B01D 63/06

(54) **ELEMENT DE FILTRATION**
FILTERUNGSELEMENT
FILTERING ELEMENT

(30) Priorité: 18.01.2006 FR 0600447; 14.03.2006 FR 0602232
(43) Date de publication de la demande: 15.10.2008
(73) Titulaire: APPLEXION, 78680 Epone (FR)
(72) Inventeur: THORAVAL, Valérie, F-69480 Morance (FR); DHALER, Didier, F-69160 Tassin la Demie-Lune (FR)
(74) Mandataire: Hirsch & Associés
(86) Numéro de dépôt international: PCT/FR2007/000089
(87) Numéro de publication internationale: WO 2007/083025

(56) Documents cités:
- FR-A- 2 741 821
- US-A1- 2003 090 028

## Description

La présente invention concerne un élément de filtration et un module de filtration.

Le document FR-A-2 720 953 décrit un élément inorganique de filtration d'un milieu fluide, en vue de récupérer un filtrat. L'élément est du type comportant un support poreux rigide inorganique de forme allongée. A l'intérieur du support, au moins deux canaux sont réalisés parallèlement à l'axe du support, la surface des canaux étant recouverte par au moins une couche séparatrice destinée à être en contact avec le milieu fluide. Chaque canal est aménagé de façon qu'une zone de sa surface soit placée directement en vis-à-vis avec une fraction de la surface externe du support. Ceci est de sorte à former un couloir d'acheminement du filtrat provenant exclusivement de ladite surface du canal. Par ailleurs, les zones des surfaces des canaux définissent, avec les surfaces externes du support placées en vis-à-vis, des épaisseurs de support sensiblement constantes.

Le document FR-A-2 720 954 décrit un élément inorganique de filtration d'un milieu fluide, en vue de récupérer un filtrat. L'élément est du type comportant un support poreux rigide inorganique, de forme cylindrique présentant un axe central longitudinal. Des canaux sont ménagés dans le support parallèlement à son axe central et dont les centres sont situés sur un cercle coaxial à l'axe central. Chaque canal présente une surface recouverte par au moins une couche séparatrice destinée à être en contact avec le milieu fluide. Chaque canal comporte aussi d'une part au moins une paroi périphérique dirigée vers la surface extérieure du support et délimitant avec cette dernière un couloir d'épaisseur constante assurant l'acheminement du filtrat ; chaque canal comporte, d'autre part, au moins une paroi radiale délimitant une cloison avec la paroi radiale en regard d'un canal voisin. Les parois sont reliées entre-elles par des congés de raccordement. De plus, chaque cloison radiale présente une épaisseur constante sur toute sa hauteur ; le rapport de la hauteur d'une cloison sur son épaisseur est inférieur ou égal à 8. Les congés de raccordement présentent un rayon compris entre 0,3 et 1,5 mm.

Le document FR 2 741 821 présente un élément inorganique de filtration d'un milieu fluide, en vue de récupérer un filtrat. L'élément est du type comportant un support poreux rigide inorganique de forme cylindrique présentant un axe central longitudinal. Des canaux sont ménagés dans le support parallèlement à son axe central et présentent une surface recouverte par au moins une couche séparatrice destinée à être en contact avec le milieu fluide. Au moins certains des canaux dits périphériques ont leurs centres situés sur un cercle coaxial à l'axe central ; ces canaux périphériques présentent, d'une part, une paroi périphérique située en regard de la surface extérieure du support et délimitant avec cette dernière un couloir d'acheminement direct du filtrat et, d'autre part, au moins une paroi radiale délimitant une cloison avec la paroi radiale en regard d'un canal voisin. Les parois sont reliées entre elles par des congés de raccordement. Les canaux périphériques possèdent aussi chacun une section droite transversale non circulaire. De plus, les canaux périphériques présentent chacun un couloir d'acheminement dont l'épaisseur augmente de part et d'autre du milieu du couloir et en direction opposée du milieu. Chaque couloir d'acheminement possède un profil en forme de voûte.

Par ailleurs, les canaux de l'élément du document FR-A-2 741 821 délimitent entre eux des cloisons dont l'épaisseur augmente en direction de l'axe central du support poreux.

Le document EP-A-0 609 275 présente un élément en céramique pour la filtration à courant ou flux tangentiel de liquides et de gaz. L'élément a un corps support allongé en matière céramique poreuse avec au moins deux canaux coaxiaux qui s'étendent à travers le corps de support. Sur la surface des canaux est appliquée une membrane céramique monocouche ou multicouches à structure poreuse calibrée ; le filtrat, filtré à l'aide de la membrane à partir d'un fluide traversant les canaux, quitte le corps de support par la surface latérale de ces canaux pour être ici récupéré à l'aide d'un dispositif approprié. Les canaux sont disposés coaxialement autour de l'axe central imaginaire du corps de support. Les canaux présentent, vus en coupe transversale, une paroi tournée vers l'extérieur dont le contour est adapté au contour extérieur du corps de support ; ainsi le corps de support présente ici une épaisseur de paroi uniforme. Les autres parois des canaux présentant un contour tel que les cloisons subsistant entre les canaux augmentent d'épaisseur vers l'extérieur en forme de coin ; l'épaisseur des cloisons augmente jusqu'à un maximum de trois fois l'épaisseur de paroi la plus faible.

Par ailleurs, il est connu de US-A-2003-0090028 un module à membranes céramiques comprenant une pluralité de canaux à section polygonale, notamment hexagonale.

Il y a donc un besoin pour un élément qui offre une alternative aux éléments décrits précédemment.

Pour cela l'invention propose un élément de filtration comprenant un support avec une surface extérieure, au moins trois canaux dans le support, les canaux comprenant une paroi périphérique dirigée vers la surface extérieure, la distance entre la paroi périphérique et la surface extérieure diminuant de part et d'autre du milieu de la paroi périphérique. En particulier, la paroi périphérique est concave.

Par la suite, il sera également décrit un élément de filtration comprenant un support avec une surface extérieure, trois canaux dans le support, les canaux comprenant une paroi périphérique dirigée vers la surface extérieure, la distance entre la paroi périphérique et la surface extérieure diminuant de part et d'autre du milieu de la paroi périphérique; à l'exclusion de l'élément comprenant des canaux sur un cercle, ces canaux ayant une forme de coeur et comprenant en outre une paroi latérale dirigée vers un canal voisin, les parois latérales de deux canaux voisins formant une cloison d'épaisseur constante.

Par la suite, il sera également décrit un élément de filtration comprenant un support avec une surface extérieure, trois canaux dans le support, les canaux comprenant une paroi périphérique dirigée vers la surface extérieure, la distance entre la paroi périphérique et la surface extérieure diminuant de part et d'autre du milieu de la paroi périphérique; à l'exclusion de l'élément comprenant des canaux sur un cercle, ces canaux ayant une forme comprenant un point de rebroussement.

Par la suite, il sera aussi décrit un élément dont les canaux comprennent en outre une paroi latérale dirigée vers un canal voisin, les parois latérales de deux canaux voisins formant une cloison d'épaisseur constante.

Les canaux comprennent en outre une paroi latérale dirigée vers un canal voisin, les parois latérales de deux canaux voisins formant une cloison d'épaisseur variable.

Selon une variante, les canaux comprennent en outre une paroi latérale dirigée vers un canal voisin, les parois latérales de deux canaux voisins formant une cloison, la cloison ayant une épaisseur qui augmente depuis le centre du support vers la surface extérieure.

Selon une variante, la cloison a en outre une partie avec une épaisseur constante.

Selon une variante, la partie de la cloison dont l'épaisseur est constante et la partie de la cloison s'évasent vers la surface extérieure sont de même hauteur.

Selon une variante, le ratio entre la hauteur de la partie à épaisseur constante et la hauteur totale de la cloison est entre 1:4 et 3:4, de préférence entre 1:3 et 2:3.

Selon une variante, en section transversale droite, la paroi latérale des canaux comporte au moins deux sections formant entre elles un angle de 1° à 45°, de préférence, de 10° à 25°.

Selon une variante, la paroi périphérique et la paroi latérale sont raccordées par un congé de raccordement.

Selon une variante, l'élément comprend deux parois latérales, les parois latérales étant raccordées par un congé de raccordement à la paroi périphérique.

Selon une variante, les parois latérales sont raccordées par un congé de raccordement.

Selon une variante, le congé de raccordement entre les parois latérales a un diamètre de 0,2 à 2 mm, de préférence de 0,3 à 1 mm.

Selon une variante, le congé de raccordement entre une paroi latérale et la paroi périphérique a un diamètre de 1 à 4 mm, de préférence de 1,7 à 3 mm.

Selon une variante, l'élément comprend entre 5 et 10 canaux, de préférence entre 6 et 9 canaux.

Selon une variante, les canaux sont sur au moins un cercle.

Selon une variante, les canaux sont sur plusieurs cercles concentriques.

Selon une variante, les canaux comprennent une paroi latérale dirigée vers un canal voisin d'un même cercle, les parois latérales de deux canaux voisins formant une cloison, et les parois latérales de deux canaux voisins d'un même cercle formant une cloison d'épaisseur variable.

Selon une variante, la cloison entre deux canaux du cercle le plus au centre du support a une épaisseur qui augmente vers la surface extérieure et la cloison entre deux canaux du ou des autres cercles a une épaisseur qui diminue vers la surface extérieure.

Selon une variante, la cloison entre deux canaux du cercle le plus au centre du support a une épaisseur qui augmente vers la surface extérieure et la cloison entre deux canaux du ou des autres cercles a une épaisseur qui diminue puis qui augmente vers la surface extérieure.

Selon une variante, l'élément comporte au moins une couronne de canaux enchevêtrés avec des canaux d'une autre couronne.

Selon une variante, la distance entre la paroi périphérique des canaux et la surface extérieure du support diminue de part et d'autre du milieu de la paroi périphérique.

Selon une variante, l'élément ne comprend pas de couche de séparation.

Selon une variante, l'élément comprend une couche de séparation sur la surface interne des canaux.

L'invention concerne aussi un module de filtration comportant plusieurs éléments de filtration tels définis précédemment.

D'autres caractéristiques et avantages de l'invention apparaîtront à la lecture de la description détaillée qui suit des modes de réalisation de l'invention, donnés à titre d'exemple uniquement et en références aux dessins qui montrent:
- figure 1, un élément de filtration selon un mode de réalisation exclu de l'invention;
- figure 2, un élément de filtration selon un autre mode de réalisation ;
- figures 3 à 6, un élément de filtration selon encore d'autres modes de réalisation les éléments de filtration des fig. 5 et 6 étant exclus de l'invention,
- figure 7, un élément de filtration selon un mode de réalisation exclu de l'invention ;
- figure 8, un canal selon un mode de réalisation exclu de l'invention.

L'invention se rapporte à un élément de filtration comprenant un support avec une surface extérieure et au moins trois canaux dans le support. Les canaux comprennent une paroi périphérique dirigée vers la surface extérieure, la distance entre la paroi périphérique et la surface extérieure diminuant de part et d'autre du milieu de la paroi périphérique. L'élément présente l'avantage de mieux résister lorsqu'il est soumis à des conditions d'utilisation sévères.

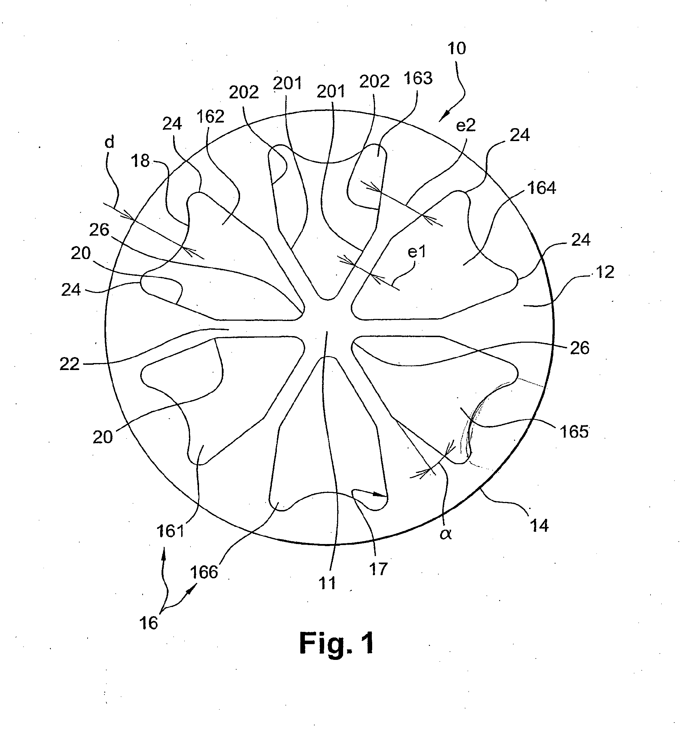

La figure 1 montre un mode de réalisation d'un élément 10 de filtration. L'élément 10 permet la mise en oeuvre d'une filtration tangentielle. L'élément 10 comprend un support 12 avec une surface extérieure 14. Le support 12 peut présenter une forme tubulaire cylindrique avec un axe central 11. La section transversale du support 12 est constante dans la direction de l'axe 11 ; toutes les sections transversales du support, quelle que soit leur position suivant l'axe 11 ont la forme représentée sur la figure 1. Cette forme peut être circulaire, hexagonale ou autre. Le support 12 est de préférence monolithique. Le support 12 est poreux de sorte à permettre la circulation d'un fluide. Le support 12 est par exemple en matériau céramique obtenu par extrusion grâce à une filière.

L'élément 10 comprend dans le support 12 au moins trois canaux 161, 162, 163 ; sur la figure 1, l'élément 10 comprend six canaux 161 à 166. Le support 12 est traversé, suivant toute sa longueur dans la direction de l'axe 11, par les canaux désignés globalement par la référence 16. Les canaux 16 sont obtenus lors de l'extrusion du support, la filière imposant une forme aux canaux. Après cuisson de la matière céramique, la surface intérieure des canaux 16 peut être, ou non, recouverte d'une couche mince d'une substance permettant d'obtenir par frittage une couche ou membrane de filtration 17 (ou couche de séparation) sur la surface interne des canaux.

Pour la mise en oeuvre d'une opération de filtration dans un élément de filtration, on fait circuler le milieu fluide à filtrer, dans la direction de l'axe 11 à l'intérieur des canaux 16. On établit une différence de pression entre la partie intérieure de l'élément 10 et le milieu extérieur de l'élément. Une fraction du milieu fluide à filtrer traverse les membranes de filtration des canaux pour imprégner la matière poreuse du support 12. Cette fraction (ou perméat) du milieu à filtrer circule à l'intérieur du support 12 en direction de la surface externe 14 du support 12.

Les canaux 16 comprennent une paroi périphérique 18 dirigée vers la surface extérieure 14. Selon la figure 1, la paroi 18 peut être en vis-à-vis de la surface extérieure 14 ; la paroi 18 peut définir un couloir d'acheminement direct du perméat vers l'extérieur de l'élément. Ceci présente l'avantage de faciliter l'évacuation du perméat depuis le canal vers l'extérieur de l'élément. La distance entre la paroi 18 périphérique et la surface extérieure 14 diminue de part et d'autre du milieu de la paroi périphérique. Selon la position des canaux de la figure 1, le couloir d'acheminement du perméat est plus épais au milieu de la paroi périphérique 18 qu'aux extrémités de la paroi périphérique 18. Ceci permet d'obtenir une plus grande épaisseur de support 12 entre le canal 16 et la paroi 18, au niveau du milieu de la paroi périphérique. La pression du fluide à filtrer étant plus importante au centre de la paroi périphérique, la résistance de l'élément 10 est ainsi améliorée.

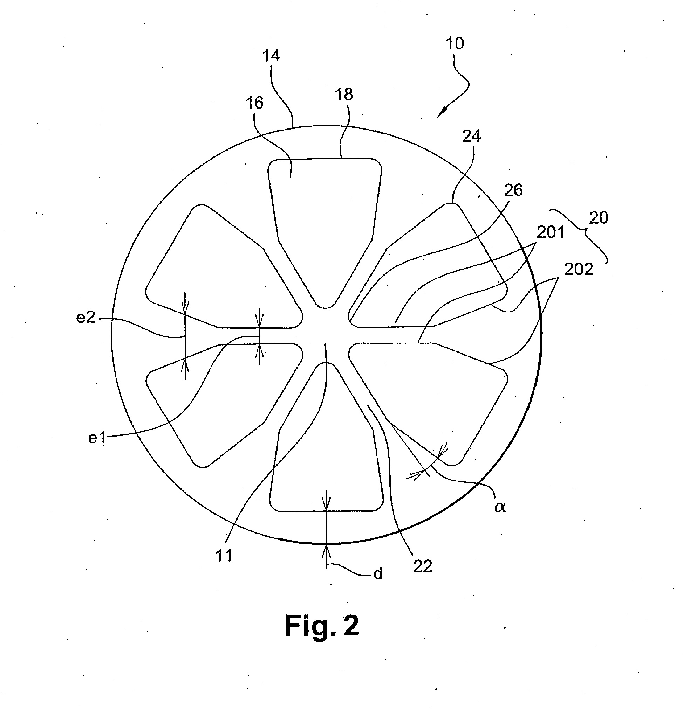

De préférence, la distance " d " entre le milieu de la paroi 18 et la surface externe 14 diminue continûment de part et d'autre du milieu de la paroi périphérique 18. Ceci permet d'obtenir une surface interne de canal qui soit continue ce qui favorise le contact du fluide à filtrer avec le support. Sur la figure 1, la distance entre le milieu de la paroi 18 et la surface extérieure est augmentée par la paroi périphérique 18 qui est saillante vers l'intérieur du canal ; la paroi 18 peut être une courbe concave, le support 12 pénétrant vers l'intérieur des canaux 16. Ceci a l'avantage d'augmenter la surface intérieure du canal au contact du fluide et donc d'augmenter la surface et la capacité de filtration de l'élément 10. Selon la figure 2, la paroi 18 peut être plate et le support peut être circulaire en section transversale ; la distance entre la paroi 18 plate et la surface extérieure circulaire diminue donc de part et d'autre du milieu de la paroi 18. Le mode de réalisation de la figure 2 diffère de celui de la figure 1 uniquement de part la forme de la paroi 18.

Les canaux 16 comprennent aussi une paroi latérale 20. La paroi latérale 20 d'un canal 161 est dirigée vers un canal voisin 162. La forme des canaux est variable ; à titre d'exemple, selon la figure 1, les canaux 16 ont deux parois latérales 20 raccordées chacune à la paroi périphérique. Les parois latérales 20 sont raccordées à la paroi périphérique 18 par l'intermédiaire d'un congé de raccordement 24. Le congé de raccordement permet d'améliorer le dépôt de la couche filtrante 17 sur la surface interne des canaux, le cas échéant. Le dépôt de la couche filtrante 17 est plus uniforme. Par ailleurs, grâce aux congés de raccordement, les efforts du fluide à filtrer sur le support sont mieux répartis le long de la surface du canal. Par ailleurs, les parois latérales 20 peuvent également être raccordées entre elles, de préférence par un congé de raccordement 26. Les avantages liés au congé 26 sont les mêmes que les avantages liés au congé 24.

Selon les figures 1 et 2, les canaux 16 ont une forme globalement triangulaire ; les parois latérales 20 sont raccordées à une de leurs extrémités par le congé 26 et sont raccordées à la paroi 18 à l'autre de leurs extrémités par le congé 24. La paroi 18 pouvant être une courbe concave (figure 1), la courbe est raccordée aux congés 24. Dans ce qui suit, par " paroi " on entend la zone de canal comprise entre deux congés de raccordement, sans prendre en compte les congés. Ainsi, les parois latérales 20 sont entre le congé 26 et un congé 24 et la paroi périphérique 18 est entre deux congés 24.

La paroi latérale 20 de deux canaux 161 et 162 voisins forme une cloison 22. La cloison 22 est une zone du support 12 permettant la circulation du fluide entre les canaux 16 en direction de la surface extérieure du support. La cloison 22 permet la filtration du fluide au travers des parois latérales des canaux puis la circulation en direction de la surface extérieure du support. La cloison 22 a une épaisseur variable. Par exemple, la cloison 22 s'évase vers la surface extérieure. La cloison 22 a une épaisseur qui augmente depuis le centre du support vers la surface extérieure du support ; en d'autres termes, la cloison 22 a une épaisseur plus importante à proximité de la surface extérieure du support qu'à proximité de l'axe central 11. La cloison a ainsi une forme de coin, permettant l'évacuation d'une quantité plus importante de perméat que dans une cloison à épaisseur constante.

Pour former une cloison s'évasant vers l'extérieur, on peut envisager que la cloison entre deux canaux s'évase continûment sur toute sa hauteur. On obtient alors une cloison en forme de coin sur toute la hauteur de la cloison.

Egalement, la cloison 22 peut s'évaser vers l'extérieur sur au moins une partie de sa hauteur. La cloison 22 a une partie avec une épaisseur constante " e1 " et une partie avec une épaisseur variable " e2 ". L'épaisseur est variable en ce sens que l'épaisseur " e2 " augmente en direction de la surface extérieure 14 du support 10. On obtient ainsi une cloison irrégulière.

Pour former une cloison de forme irrégulière, la paroi latérale des canaux a une forme particulière. En section transversale selon la figure 1, la paroi latérale 20 des canaux est une ligne brisée. La paroi latérale 20 comporte au moins deux sections 201 et 202 rectilignes formant un angle alpha α entre elles. L'angle alpha α est par exemple de 1° à 45°, de préférence de 10° à 25°. Les sections 201 et 202 sont raccordées par un congé de raccordement de diamètre supérieur à 0,3 mm, de préférence supérieur à 0,4 mm, par exemple de 1,5 à 2 mm. Pour chaque canal, les sections 201 sont raccordées entre elles par le congé 26. Les sections 201 de chaque canal forment un angle entre elles. Les sections 202 de chaque canal forment aussi un angle entre elles. L'angle entre les sections 202 est moins élevé que l'angle entre les sections 201. Les sections 201 donnent aux canaux une forme en pointe qui permet de disposer les canaux à proximité du centre du support. Les sections 201, d'une part, et 202, d'autre part, s'évasent en direction de la paroi périphérique 18. Les sections 201, d'une part, et 202, d'autre part, s'évasent en direction de la surface extérieure 14 du support. Mais les sections 202 s'évasent moins que les sections 201. Les sections 202 pourraient aussi être parallèles. Les canaux ont une forme de molaire. Plus le nombre de canaux souhaité est élevé, moins les sections 201 sont évasées, et inversement.

Les sections 201 et 202 peuvent être de longueur variable. Les sections 201 peuvent être plus longues que les sections 202. Par exemple, selon la hauteur d'un canal (depuis le congé 26 à la paroi périphérique 18), le ratio entre la hauteur des sections 201 et la hauteur du canal est entre 1:4 et 3:4, de préférence entre 1:3 et 2:3. Ainsi, le ratio entre la hauteur à épaisseur constante de la cloison 22 et la hauteur totale de la cloison 22 est entre 1:4 et 3:4, de préférence entre 1:3 et 2:3.

Les sections 201 peuvent aussi avoir la même longueur que les sections 202. Ainsi, sur la hauteur d'un canal (depuis le congé 26 à la paroi périphérique 18), les sections 201 correspondent à la moitié de la hauteur et les sections 202 correspondent à l'autre moitié de la hauteur. Ainsi, la cloison 22, délimitée entre deux parois latérales 20 de deux canaux voisins 161, 162, a une partie avec une épaisseur constante qui a la même hauteur que la partie de la cloison dont l'épaisseur est variable.

Selon les figures 1 et 2, la partie de la cloison dont l'épaisseur est constante est plus au centre du support 12 que la partie de la cloison dont l'épaisseur est variable. En d'autres termes, depuis l'axe 11 au centre du support jusqu'à la surface extérieure 14 du support 11, la cloison 22 a d'abord une épaisseur constante puis une épaisseur augmentant en direction de la surface extérieure. Ceci permet d'augmenter le débit de circulation de fluide dans le support ; en effet, la quantité de fluide dans le support tend à augmenter au fur et à mesure que l'on se rapproche de la surface extérieure, et est évacué vers l'extérieur du support. Ainsi, le fluide dispose de plus de place dans le support pour circuler à mesure que l'on se rapproche de la surface extérieure du support. Le débit de fluide à filtrer peut donc être augmenté.

Les canaux 16 peuvent être disposés dans le support sur un cercle centré sur l'axe central 11, en particulier, de telle manière que les canaux ont leur centre situé sur un cercle centré sur l'axe central 11. Les canaux 16 sont disposés dans le support selon une couronne centrée sur l'axe. Ceci permet de disposer de manière régulière les canaux dans le support, ce qui facilite la fabrication de l'élément. Cette disposition est visible sur la figure 1. Selon la figure 1, les canaux sont disposés de manière identique sur le cercle ; ceci permet aux canaux de fonctionner de manière identique et d'éviter un colmatage préférentiel de certains canaux.

Selon les figures 1 et 2, les canaux 16 disposés sur un cercle ont le congé 26 reliant les parois 20 latérales à proximité de l'axe central 11 et la paroi périphérique 18 en vis-à-vis de la surface extérieure 14. Les canaux ont leurs parois latérales dirigées vers la paroi latérale des canaux voisins. Les parois latérales de deux canaux voisins délimitent la cloison 22. Entre les canaux, une partie de la cloison 22 comporte une épaisseur constante "e1" et une partie de la cloison 22 comporte une épaisseur variable " e2 ". La partie à épaisseur constante est plus au centre que la partie à épaisseur variable. L'épaisseur variable augmente en direction de la surface extérieure 14. La distance entre les parois périphériques 18 et la surface extérieure en vis-à-vis diminue de part et d'autre du milieu de la paroi périphérique. On a donc d'une part un couloir d'acheminement du fluide entre la paroi périphérique 18 et la surface extérieure 14 qui est bombé au niveau du milieu de la paroi périphérique 18 pour augmenter la résistance du support et d'autre part, des cloisons 22 entre les canaux dont l'épaisseur est constante puis variable à mesure que l'on se rapproche de la surface extérieure du support pour augmenter le débit de fluide dans le support. Ces caractéristiques permettent à l'élément de résister à des pressions plus importantes mises en oeuvre pour augmenter le débit de fluide circulant dans le support.

A titre d'exemple, l'élément 10 peut avoir un diamètre externe entre 20 et 40 mm, de préférence 25 mm. Les congés de raccordement 24 peuvent avoir un diamètre de 1 à 4 mm, de préférence de 1,7 à 3 mm. Le congé de raccordement 26 peut avoir un diamètre de 0,2 à 2 mm, de préférence de 0,3 à 1 mm. Le nombre de canaux 16 peut être de 5 à 10, de préférence de 6 à 9. La distance entre la paroi périphérique 18 des canaux et la surface extérieure 14, pour un diamètre externe de 25 mm, est par exemple de 1,5 mm pour la distance la plus étroite à 3 mm pour la distance la plus importante au milieu de la paroi périphérique ; de préférence la distance est de 1,8 mm à 2, 8 mm.

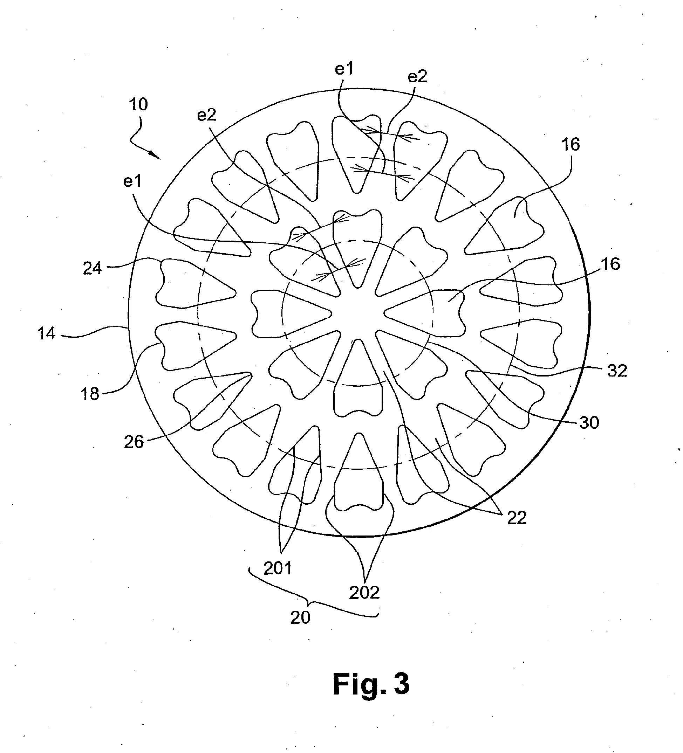

La figure 3 montre un autre mode de réalisation de l'élément 10 de filtration. Selon la figure 3, les canaux sont disposés selon deux cercles 30, 32 concentriques et centrés sur l'axe 11. Bien entendu, il est possible d'augmenter encore le nombre de cercles sur lesquels sont disposés les canaux. La disposition de la figure 3 permet d'augmenter la surface des canaux permettant la filtration du fluide.

Selon la figure 3, les canaux comprennent une paroi 20 latérale dirigée vers un canal voisin d'un même cercle, les parois latérales de deux canaux voisins formant une cloison. Les parois latérales de deux canaux voisins d'un même cercle forment une cloison 22 d'épaisseur variable. En effet, selon le cercle 30, les canaux 16 définissent une cloison 22 ayant une épaisseur qui augmente depuis le centre du support vers la surface extérieure. Le cercle 30 est plus au centre du support que le cercle 32. Selon le cercle 32, les canaux 16 définissent une cloison 22 ayant une épaisseur qui diminue depuis le centre du support vers la surface extérieure. En section droite transversale, les canaux 16 de la figure 3 ont la même forme que les canaux de la figure 1. Ainsi, on retrouve sur la figure 3 les sections 201 et 202 ainsi que le congé 26 de raccordement. Selon le cercle 30, l'épaisseur " e1 " est constante puis l'épaisseur " e2 " augmente en s'évasant vers la surface extérieure ; la cloison 22 entre deux canaux du cercle 30 le plus au centre du support a une épaisseur qui augmente vers la surface extérieure. Le cercle 30 correspond à la disposition des canaux selon la figure 1. Selon le cercle 32, l'épaisseur " e1 " diminue vers la surface extérieure et l'épaisseur " e2 " dépend de l'angle alpha entre les sections 201 et 202 ; l'épaisseur " e2 " peut être constante ou peut augmenter en direction de la surface extérieure. Les épaisseurs sont donc variables, ce qui favorise la circulation du fluide vers l'extérieur du support. Le support peut comporter plus de deux cercles concentriques, les cercles supplémentaires ont une disposition des canaux selon celle du cercle 32.

Selon la figure 3, et quel que soit le cercle, la distance entre la paroi périphérique 18 des canaux 16 et la surface extérieure 14 du support diminue de part et d'autre du milieu de la paroi périphérique. En particulier, la paroi périphérique 18 est concave ; la paroi 18 est bombée vers l'intérieur du canal. Les mêmes remarques et descriptions que pour la figure 1 sur la distance entre la paroi périphérique des canaux et la surface extérieure du support et sur la forme des canaux s'appliquent à la figure 3.

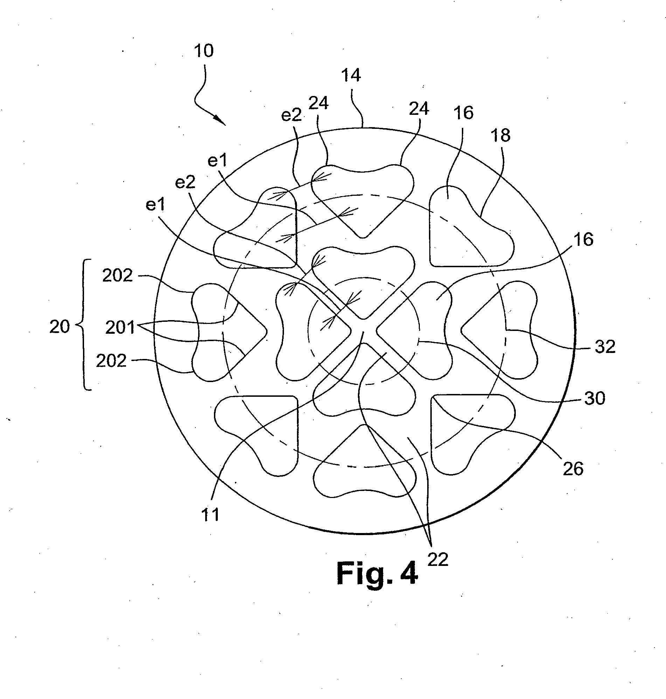

La figure 4 montre une variante du mode de réalisation de l'élément de la figure 3. En plus de la figure 3, l'élément 10 de la figure 4 comporte au moins une couronne des canaux enchevêtrés avec des canaux d'une autre couronne. En effet, les canaux 16 de la couronne 32 sont enchevêtrés avec les canaux 16 de la couronne 30. En particulier, les congés de raccordement 26 des canaux de la couronne 32 sont disposés entre les congés de raccordement 24 de deux canaux voisins de la couronne 30. Ceci permet un gain de place dans le support de sorte à pouvoir augmenter la surface filtrante des canaux.

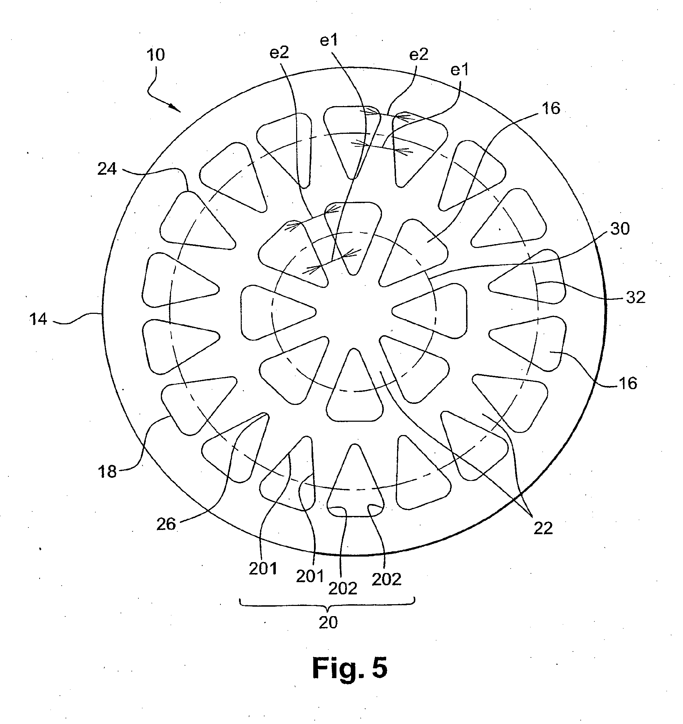

Selon la figure 5, les canaux sont disposés selon deux cercles 30, 32 concentriques et centrés sur l'axe 11. Bien entendu, il est possible d'augmenter encore le nombre de cercles sur lesquels sont disposés les canaux. La disposition de la figure 5 permet d'augmenter la surface des canaux permettant la filtration du fluide.

Selon la figure 5, les canaux sont disposés de la même manière que sur la figure 3. Les remarques et descriptions de la figure 3 s'appliquent à la figure 5. La figure 5 diffère de la figure 3 en ce que les canaux ont la même forme que les canaux de la figure 2. En particulier, la paroi périphérique 18 est plate et la section transversale droite de l'élément est circulaire, la distance entre la paroi périphérique et la surface extérieure diminuant ainsi de part et d'autre du milieu de la paroi périphérique. Les remarques et descriptions de la figure 2 s'appliquent à la figure 5.

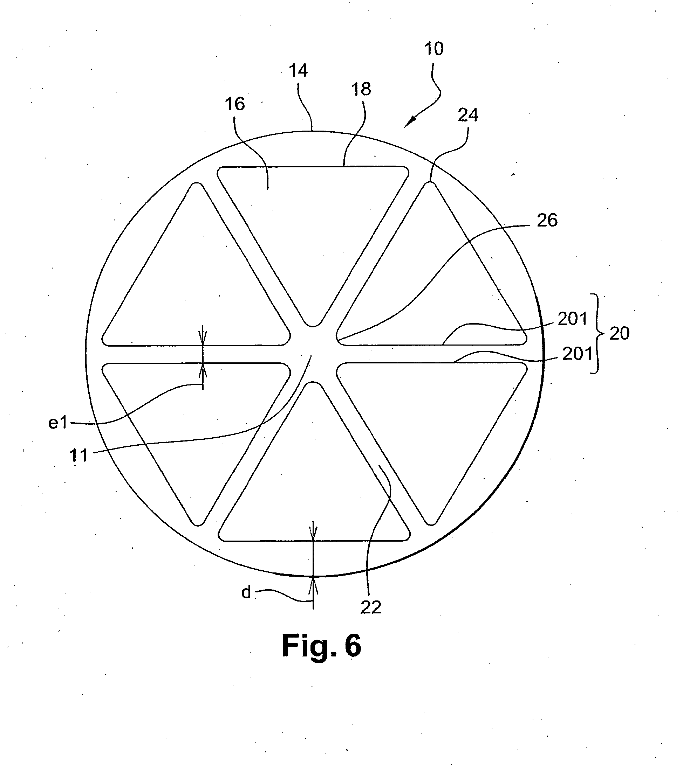

Selon la figure 6, les canaux comprennent une paroi 20 latérale dirigée vers un canal voisin d'un même cercle, les parois latérales de deux canaux voisins formant une cloison 22. Les parois latérales de deux canaux voisins d'un même cercle forment une cloison 22 d'épaisseur constante. De plus, la paroi 18 est plate et le support peut être circulaire en section transversale. En section droite transversale, les canaux 16 de la figure 6 ont une forme sensiblement triangulaire. La paroi peut aussi être concave vers l'intérieur du canal, comme cela est le cas sur la figure 1. La distance « d » entre la paroi 18 plate et la surface extérieure circulaire diminue donc de part et d'autre du milieu de la paroi 18. Les canaux de la figure 6 sont comparables aux canaux des figures 1 et 2, sauf en ce que les canaux de la figure 6 n'ont pas de section de cloison s'évasant vers l'extérieure du support. Ainsi, on retrouve sur la figure 6 seulement la section 201 ainsi que le congé 26 de raccordement. L'épaisseur " e1 " est constante sur toute la hauteur de la cloison. On notera aussi que les parois latérales et la paroi périphérique sont raccordées par un congé de raccordement 24, comme cela est décrit précédemment. Le support de la figure 6 est de fabrication simple. Le support peut aussi comporter plusieurs cercles concentriques, le cercle du centre étant celui de la figure 6. Les canaux des autres cercles peuvent être les canaux de la figure 6 ou ceux des autres figures.

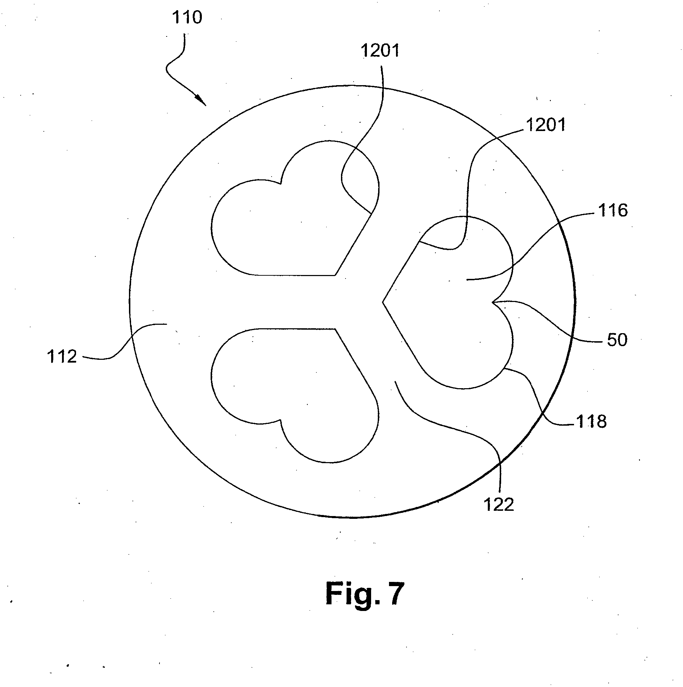

Selon un mode de réalisation, l'élément de la figure 7 correspond à un disclaimer. Sur la figure 7, on voit un élément 110 comportant trois canaux 116 disposés sur un même cercle dans un support 112. Les canaux ont une forme de coeur comprenant une paroi latérale 1201 dirigée vers un canal voisin, les parois latérales de deux canaux voisins formant une cloison 122 d'épaisseur constante. En particulier, l'élément comprend des canaux 116 sur un cercle, ces canaux ayant une forme comprenant un point de rebroussement. La paroi périphérique 118 comporte le point 50. L'inconvénient de l'élément de la figure 7 est que l'arrête vive du point de rebroussement est difficile à réaliser et, le cas échéant, complique le dépôt d'une couche de séparation. On préfère donc la paroi périphérique selon les autres figures, qui est continue. Le terme de rebroussement est défini comme une arête ; en particulier un congé de diamètre supérieur à 0,15 mm au niveau de la forme coeur (au voisinage du point référencé 50 sur la figure) n'est pas considéré comme un point de rebroussement.

La présente invention peut comporter des canaux en forme de coeur avec un point de rebroussement, pourvu que le nombre de canaux de cette forme soit différent de trois.

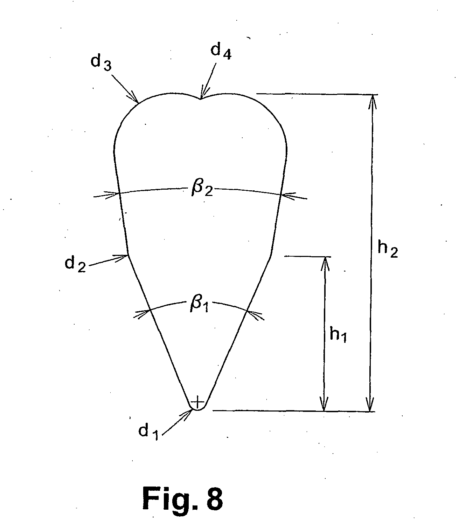

La figure 8 est une illustration d'un canal susceptible d'être utilisé dans les figures 1 à 6, le canal étant constitué d'arcs de cercle et de sections droites dont les caractéristiques géométriques sont indiquées ci-dessous :
- d1 est de 0,3 à 1,4 mm, en particulier de 0,4 à 1 mm ;
- d2 est de 1,5 à 2,5 mm, en particulier de 1,8 à 2,2 mm ;
- d3 est de 1,5 à 4 mm, en particulier de 2,7 à 3,3 mm ;
- d4 est de 0,8 à 1,5 mm, en particulier de 0,9 à 1,2 mm ;
- betal est de 35 à 50°, en particulier de 40 à 45°, betal étant l'angle entre les sections 201 ;
- beta2 est de 15 à 25°, en particulier de 20°, beta2 étant l'angle entre les sections 202 ;
- h1 est de 1,5 à 5 mm, en particulier de 4 à 4,5 mm ;
- h2 est de 4 à 9,5 mm, en particulier de 8,5 à 9 mm ;
- le rapport h1/h2 est compris entre de 0,4 et 0,6, en particulier de 0,45 à 0,55 mm ;
di indiquant un diamètre.

Le nombre de ces canaux pour un élément de diamètre extérieur de 25 mm, est jusqu'à 30, notamment 7 à 10, en particulier 8 ou 9. Le nombre de ces canaux pour un élément de diamètre extérieur de 40 mm, est jusqu'à 75.

## Revendications

1. Un élément (10) de filtration comprenant
- un support (12) avec une surface extérieure (14),
- au moins trois canaux (161, 162, 163, ...) dans le support (12), les canaux (161, 162, 163, ...) comprenant
- une paroi (18) périphérique dirigée vers la surface extérieure (14), la distance entre la paroi (18) périphérique et la surface extérieure (14) diminuant de part et d'autre du milieu de la paroi périphérique
**caractérisé en ce que** la paroi périphérique est concave.

2. L'élément selon la revendication 1, les canaux (161, 162, 163, ...) comprenant en outre une paroi latérale (20) dirigée vers un canal voisin, les parois latérales (20) de deux canaux voisins (161, 162) formant une cloison (22) d'épaisseur constante.

3. L'élément selon la revendication 1, les canaux (161, 162, 163, ...) comprenant en outre une paroi latérale (20) dirigée vers un canal voisin, les parois latérales (20) de deux canaux voisins (161, 162) formant une cloison (22) d'épaisseur variable.

4. L'élément selon la revendication 1 ou 3, les canaux comprenant en outre une paroi (20) latérale dirigée vers un canal voisin, les parois latérales de deux canaux voisins formant une cloison (22), la cloison ayant une épaisseur qui augmente depuis le centre du support vers la surface extérieure (14).

5. L'élément selon la revendication 4, la cloison (22) ayant en outre une partie avec une épaisseur constante.

6. L'élément selon l'une des revendications 2 à 5, dans lequel la paroi périphérique (18) et la paroi latérale (20) sont raccordées par un congé de raccordement (24).

7. L'élément selon l'une des revendications 2 à 6, comprenant deux parois latérales (20), les parois latérales
- étant raccordées par un congé de raccordement (24) à la paroi périphérique et
- sont raccordées par un congé de raccordement (26).

8. L'élément selon l'une des revendications 1 à 7, dans lequel les canaux sont sur au moins un cercle.

9. L'élément selon la revendication 8, dans lequel
- les canaux comprennent une paroi (20) latérale dirigée vers un canal voisin d'un même cercle, les parois latérales de deux canaux voisins (161, 162) formant une cloison (22), et dans lequel
les parois latérales (20) de deux canaux voisins (161, 162) d'un même cercle forment une cloison (22) d'épaisseur variable.

10. Un module de filtration comportant plusieurs éléments de filtration selon l'une des revendications 1 à 9.

## Patentansprüche

1. Filterelement (10), welches umfasst:
- einen Träger (12) mit einer Außenfläche (14),
- mindestens drei Kanäle (161, 162, 163, ...) in dem Träger (12),
wobei die Kanäle (161, 162, 163, ...) umfassen eine Umfangswand (18), die zu der Außenfläche (14) hin gerichtet ist, wobei sich der Abstand zwischen der Umfangswand (18) und der Außenfläche (14) beiderseits der Mitte der Umfangswand verringert,
**dadurch gekennzeichnet, dass** die Umfangswand konkav ist.

2. Filterelement nach Anspruch 1, wobei die Kanäle (161, 162, 163, ...) außerdem eine Seitenwand (20) umfassen, die zu einem benachbarten Kanal hin gerichtet ist, wobei die Seitenwände (20) zweier benachbarter Kanäle (161, 162) eine Trennwand (22) von konstanter Dicke bilden.

3. Filterelement nach Anspruch 1, wobei die Kanäle (161, 162, 163, ...) außerdem eine Seitenwand (20) umfassen, die zu einem benachbarten Kanal hin gerichtet ist, wobei die Seitenwände (20) zweier benachbarter Kanäle (161, 162) eine Trennwand (22) von variabler Dicke bilden.

4. Filterelement nach Anspruch 1 oder 3, wobei die Kanäle eine Seitenwand (20) umfassen, die zu einem benachbarten Kanal hin gerichtet ist, wobei die Seitenwände zweier benachbarter Kanäle eine Trennwand (22) bilden, wobei die Trennwand eine Dicke aufweist, welche von der Mitte des Trägers zu der Außenfläche (14) hin zunimmt.

5. Filterelement nach Anspruch 4, wobei die Trennwand (22) außerdem einen Teil mit einer konstanten Dicke aufweist.

6. Filterelement nach einem der Ansprüche 2 bis 5, wobei die Umfangswand 18 und die Seitenwand (20) durch eine Ausrundung (24) miteinander verbunden sind.

7. Filterelement nach einem der Ansprüche 2 bis 6, welches zwei Seitenwände (20) umfasst, wobei die Seitenwände
- durch eine Ausrundung (24) mit der Umfangswand verbunden sind und
- durch eine Ausrundung (26) miteinander verbunden sind.

8. Filterelement nach einem der Ansprüche 1 bis 7, wobei die Kanäle auf mindestens einem Kreis angeordnet sind.

9. Filterelement nach Anspruch 8, wobei
- die Kanäle eine Seitenwand (20) umfassen, die zu einem benachbarten Kanal desselben Kreises hin gerichtet ist, wobei die Seitenwände zweier benachbarter Kanäle (161, 162) eine Trennwand (22) bilden, und wobei
die Seitenwände (20) zweier benachbarter Kanäle (161, 162) ein und desselben Kreises eine Trennwand (22) von variabler Dicke bilden.

10. Filtermodul, das mehrere Filterelemente nach einem der Ansprüche 1 bis 9 aufweist.

## Claims

1. A filter element (10) comprising
- a support (12) with an outside surface (14),
- at least three channels (161, 162, 163, ...) in the support (12),
the channels (161, 162, 163, ...) comprising a peripheral wall (18) directed towards the outside surface (14), the distance between the peripheral wall (18) and the outside surface (14) reducing on each side of the middle of the peripheral wall **characterized in that** the peripheral wall is concave.

2. The element according to claim 1, the channels (161, 162, 163, ...) comprising moreover a side wall (20) directed towards an adjacent channel, the side walls (20) of two adjacent channels (161, 162) forming a partition (22) of constant thickness.

3. The element according to claim 1, the channels (161, 162, 163, ...) comprising moreover a side wall (20) directed towards an adjacent channel, the side walls (20) of two adjacent channels (161, 162) forming a partition (22) of variable thickness..

4. The element according to claim 1 or 3, the channels comprising moreover a side wall (20) directed towards an adjacent channel, the side walls of two adjacent channels forming a partition (22), the partition having a thickness increasing from the centre of the support towards the outside surface (14).

5. The element according to claim 4, the partition (22) having moreover a part showing a constant thickness.

6. The element according to one of claims 2 to 5, in which the peripheral wall (18) and the side wall (20) are connected by a connection fillet (24).

7. The element according to one of claims 2 to 6, comprising two side walls (20), the side walls
- being connected by a connection fillet (24) to the peripheral wall,
- being connected by a connection fillet (26).

8. The element according to one of claims 1 to 7, in which the channels are in at least one circle.

9. The element according to claim 8, in which
- the channels comprise a side wall (20) directed towards an adjacent channel of a same circle, the side walls of two adjacent channels (161, 162) forming a partition (22), and in which
- the side walls (20) of two adjacent channels (161, 162) of a same circle form a partition (22) of variable thickness.

10. A filter module comprising several filter elements according to one of claims 1 to 9.
